# EUROPEAN PATENT APPLICATION

(11) **EP 3 572 547 A1**
(43) Date of publication of application: **27.11.2019**
(21) Application number: 18887221.2
(22) Date of filing: 23.03.2018
(51) Int. Cl.: C22C 38/00, B21B 1/088, C21D 8/00, C22C 38/58

(54) **ROLLED H-SHAPED STEEL AND METHOD FOR MANUFACTURING SAME**

(71) Applicant: Nippon Steel Corporation, Tokyo 1008071 (JP)
(72) Inventor: The designation of the inventor has not yet been filed
(74) Representative: Vossius & Partner Patentanwälte Rechtsanwälte mbB
(86) International application number: PCT/JP2018/011878
(87) International publication number: WO 2019/180957

(57) **Abstract**

In a rolled H-shape steel, at a (1/6)F position from an outer edge surface in a flange width-direction a microstructure at a depth of 100 µm from an outer surface in the flange thickness-direction and a microstructure at a depth of (1/2)t_{f} from the outer surface in the flange thickness-direction contain 95% or more of ferrite and pearlite and 5% or less of a residual structure by area ratio, the difference in Vickers hardness therebetween is 50 Hv or less, the yield strength is 385 to 505 N/mm², the tensile strength is 550 to 670 N/mm², the yield ratio is 0.80 or less, an elongation is 16.0% or more, the V-notch Charpy absorbed energy at 0°C is 70 J or more, the height is 700 to 1000 mm, the flange width is 200 to 400 mm, the flange thickness is 22 to 40 mm, and the web thickness is 16 mm or more.

## Description

### [Technical Field of the Invention]

The present invention relates to a rolled H-shape steel manufactured without water cooling after hot rolling, and a manufacturing method thereof.

### [Related Art]

In recent years, an H-shape steel used for structural members such as buildings is required not only to be lightweight but also to undergo high-strengthening for the purpose of improving the construction efficiency by integration of structural members, a reduction in joint portions, and the like. In the related art, a welded H-shape steel manufactured by welding steel plates is applied to the H-shape steel which is required to have high strength. However, in a case of the welded H-shape steel, there is a problem that costs for the construction period, inspection costs, and the like are required.

Furthermore, in addition to high strength, a reduction in yield ratio is required for the H-shape steel from the viewpoint of earthquake resisting. The yield ratio ("YR") is the ratio obtained by dividing the yield strength by the tensile strength. For example, in order to prevent interlayer collapse of buildings, steels having a YR reduced to 0.8 or less are widely used. However, in general, the YR tends to increase as the strength of the steel increases.

In order to reduce the YR by increasing the strength of the steel, for example, it is effective to form the microstructure of the steel into a dual-phase structure consisting of soft ferrite and hard martensite or bainite. A rolled H-shape steel which achieves both high-strengthening and a reduction in yield ratio by performing accelerated cooling after hot rolling to obtain such a dual-phase structure, and a manufacturing method thereof are proposed (for example, Patent Documents 1 and 2). However, in this method, since the accelerated cooling is performed, there may be cases where the performance of the water cooling apparatus and costs for installation of facilities become problems.

In addition, Patent Document 8 discloses a manufacturing method of a rolled H-shape steel having a low yield ratio and excellent low temperature toughness. Patent Document 9 discloses a web thinned high strength H-shape steel which includes a flange formed of a hard layer having a microstructure primarily containing bainite or tempered martensite on the outer surface side and a soft layer having a microstructure primarily containing ferrite on the inner surface side, a web having a mixed microstructure of processed ferrite and pearlite, and has a yield ratio of 80% or less.

However, in Patent Documents 8 and 9, since water cooling is performed after rolling in the manufacturing, as described above, large costs for installation of facilities are required, and the difference in hardness between the outer surface and the thickness middle of the flange increases. In this case, stress concentration is likely to occur, and there is concern that the energy absorption capacity in a case of receiving an external force such as an earthquake may be low. Therefore, in a case of use particularly in Japan, there is a need to increase the earthquake resisting for structure design and the degree of freedom of design is reduced. Furthermore, the hardness of the outer surface side of the flange becomes excessive, and it becomes difficult to perform bolt hole piercing, which causes problems in processing for utilization.

Regarding such problems, rolled H-shape steels with high strength and low YR manufactured by performing air cooling after hot rolling are proposed (for example, Patent Documents 3 to 5). Patent Document 3 discloses that by promoting recrystallization during hot rolling, a rolled H-shape steel having high strength is obtained without excessively increasing the yield strength. Patent Documents 4 and 5 disclose that ferrite is refined by precipitating VN.

However, the rolled H-shape steel is welded in some cases and needs to secure the toughness of welds. In the case of the rolled H-shape steel described in Patent Document 3, the carbon equivalent (Ceq) is limited in order to secure weldability. In the weld, the grain size becomes coarse due to heat affect, and there may be cases where the toughness decreases. In Patent Document 3, grain refinement of the structure is attempted by hot rolling. However, since alloying elements forming grains which cause pinning or nucleation of ferrite are not contained in a large amount, there is concern that the toughness of a heat-affected zone may decrease.

In the rolled H-shape steels described in Patent Documents 4 and 5, VN is formed by increasing the N content. Therefore, at the interface between the heat-affected zone and the weld metal, coarsening of the grain size is suppressed, and good toughness is obtained. However, if a large amount of N is contained in the rolled H-shape steel, the amount of N in the weld metal increases, and the weld metal becomes embrittled, or cracking occurs after welding. Therefore, the weldability is impaired in some cases.

In addition, the present inventors propose a rolled H-shape steel which is obtained by controlling the grain size of ferrite and the hardness ratio between ferrite and pearlite, and has high strength, low YR, and excellent weldability in as-rolled state, and a manufacturing method thereof (for example, Patent Document 6).

However, in an H-shape steel having a large height or flange width, the temperature significantly decreases during rolling and shaping steps, and the cooling rate also increases in a cooling step after the rolling. Therefore, even if the method of Patent Document 6 is applied to the H-shape steel having a large height or flange width, the yield strength (YR) cannot be sufficiently reduced.

Patent Document 7 discloses a rolled H-shape steel which is manufactured by performing air cooling after hot rolling, has good weldability and toughness, and achieves both high strength and low yield ratio, and a manufacturing method thereof. However, in Patent Document 7, the dimensions of the H-shape steel, which are extremely important for suitably obtaining the material properties such as yield strength, tensile strength, and yield ratio required for the rolled H-shape steel are unclear.

### [Prior Art Document]

### [Patent Document]

[Patent Document 1] Japanese Unexamined Patent Application, First Publication No. H11-172328
[Patent Document 2] Japanese Unexamined Patent Application, First Publication No. 2002-363642
[Patent Document 3] Japanese Unexamined Patent Application, First Publication No. H3-191020
[Patent Document 4] Japanese Unexamined Patent Application, First Publication No. H10-60576
[Patent Document 5] Japanese Unexamined Patent Application, First Publication No. H11-256267
[Patent Document 6] Japanese Unexamined Patent Application, First Publication No. 2016-117945
[Patent Document 7] Japanese Unexamined Patent Application, First Publication No. 2016-117932
[Patent Document 8] Japanese Unexamined Patent Application, First Publication No. 2006-249475
[Patent Document 9] Japanese Unexamined Patent Application, First Publication No. 2006-144087

### [Disclosure of the Invention]

### [Problems to be Solved by the Invention]

The present invention has been made taking the foregoing circumstances into consideration. An object of the present invention is to provide a rolled H-shape steel which achieves both high strength and low yield ratio, has excellent elongation, and has excellent toughness in a weld, and a manufacturing method thereof.

### [Means for Solving the Problem]

The present invention relates to a rolled H-shape steel which achieves high-strengthening by maximizing the use of precipitation strengthening by not V nitride but V carbide, and achieves a reduction in yield ratio by hardening of pearlite by C and Mn and suppression of excessive refinement of ferrite. The rolled H-shape steel of the present invention has a tensile strength (TS) of 550 N/mm² or more and a yield ratio (YR) of 0.80 or less.

In addition, the rolled H-shape steel of the present invention is obtained by a manufacturing method in which hot rolling is performed at a high temperature, thereafter air cooling is performed without accelerated cooling to transform a structure into ferrite-pearlite and adjust the difference in hardness between the outer surface and the inside of a flange, and slow cooling is further performed to promote precipitation of VC.

The gist of the present invention is as follows.
[1] According to an aspect of the present invention, a rolled H-shape steel includes, as a steel composition, by mass%: C: 0.10% to 0.25%; Si: 0.05% to 0.50%; Mn: 0.70% to 1.80%; V: 0.06% to 0.20%; N: 0.0010% to 0.0040%; Ti: 0.003% to 0.015%; Ca: 0.0003% to less than 0.0020%; Cu: 0% to 0.30%; Ni: 0% to 0.20%; Mo: 0% to 0.30%; Cr: 0% to 0.05%; Mg: 0% to less than 0.0030%; REM: 0% to 0.010%; Nb: limited to 0.010% or less; Al: limited to 0.06% or less; O: limited to 0.0035% or less; and a remainder including of Fe and impurities, in which, when a width of a flange is referred to as F and a thickness of the flange is referred to as t_{f}, at a (1/6)F position from an outer edge surface in a flange width-direction, a microstructure at a depth of 100 µm from an outer surface in a flange thickness-direction and a microstructure at a depth of (1/2)t_{f} from the outer surface in the flange thickness-direction contain 95% or more of a ferrite and a pearlite and 5% or less of a residual structure by area ratio, a difference between a Vickers hardness at the depth of 100 µm from the outer surface in the flange thickness-direction and a Vickers hardness at the depth of (1/2)t_{f} from the outer surface in the flange thickness-direction is 50 Hv or less, at (1/4)t_{f} from the outer surface in the flange thickness-direction and at the (1/6)F position from the outer edge surface in the flange width-direction, a yield strength is 385 to 505 N/mm², a tensile strength is 550 to 670 N/mm², a yield ratio is 0.80 or less, an elongation is 16.0% or more, and a V-notch Charpy absorbed energy at 0°C is 70 J or more, and as dimensions, a height is 700 to 1000 mm, a flange width is 200 to 400 mm, a flange thickness is 22 to 40 mm, and a web thickness is 16 mm or more.
[2] The rolled H-shape steel according to [1] may contain one or two or more of, by mass%, Cu: 0.01% to 0.30%, Ni: 0.01% to 0.20%, Mo: 0.01% to 0.30%, and Cr: 0.01% to 0.05%.
[3] The rolled H-shape steel according to [1] or [2] may contain, by mass%, REM: 0.0005% to 0.010%.
[4] The rolled H-shape steel according to any one of [1] to [3] may contain, by mass%, Mg: 0.0003% to less than 0.0030%.
[5] According to another aspect of the present invention, a manufacturing method of the rolled H-shape steel according to any one of [1] to [4] includes: casting a molten steel having the steel composition according to any one of [1] to [4], into a slab having a slab length of 7.0 m or less; heating the slab to 1200°C to 1350°C, and performing hot rolling on the slab at a finishing temperature of 850°C or higher to obtain an H-shape steel; and performing an air cooling on the H-shape steel.

### [Effects of the Invention]

According to the aspects of the present invention, a rolled H-shape steel which is an H-shape steel manufactured without using an accelerating cooling apparatus which requires large-scale facility investment, has a strength as high as TS ≥ 550 N/mm², a yield ratio as low as YR ≤ 0.80, excellent elongation, and excellent toughness in a weld can be obtained.

When such a rolled H-shape steel is used, for example, in a case where the rolled H-shape steel is used for buildings, a reduction in the amount of steel used, a reduction in construction costs for welding, inspection, and the like, and a significant reduction in costs due to a reduction in the construction period can be achieved. In addition, according to the rolled H-shape steel, since the difference in hardness between the surface layer area of the outer surface of the flange and the thickness middle portion of the flange is small, brittle fracture resistance during an earthquake due to stress concentration is improved and a difficulty in bolt hole piercing due to excessive outer surface hardness can be avoided.

### [Brief Description of the Drawings]

FIG. 1 is a view showing an example of a manufacturing apparatus of a rolled H-shape steel according to an embodiment.
FIG. 2 is a view showing positions where structure observation is performed, and measurement positions of mechanical properties.

### [Embodiments of the Invention]

The present inventors examined a rolled H-shape steel excellent in safety and workability with low yield ratio and high strength by focusing on precipitation strengthening by V carbide, the dimensions of the rolled H-shape steel, the microstructure of the rolled H-shape steel, and the hardness distribution in the thickness direction of a flange after hot rolling, and a manufacturing method thereof.

In the related art, in steels having a structure containing ferrite and pearlite, the dominant factor of the yield strength is the grain size and hardness of ferrite, which is relatively soft. In addition, the dominant factor of the tensile strength is the strength, fraction, and the like of ferrite-pearlite. In a case where high-strengthening is attempted by precipitation strengthening, precipitates increase the yield strength and refine the grain size, resulting in a tendency toward an increase in the yield ratio (YR). The ferrite-pearlite refers to a structure in which ferrite and pearlite are mixed.

Considering safety during an earthquake, it is preferable to make the yield ratio low. In general, as the tensile strength increases, the yield strength increases, and the yield ratio (= yield strength / tensile strength) also increases. Therefore, in the related art, it is difficult to achieve both high-strengthening and suppression of the yield ratio.

The present inventors found that by suppressing the Nb content and adding Ti to suppress the formation of VN, which becomes intragranular transformation nuclei, excessive refinement of ferrite grain sizes can be prevented, and an increase in the hardness of ferrite can be suppressed.

In addition, the present inventors found that by increasing the hardness of pearlite which greatly contributes to the tensile strength by promoting precipitation of VC through optimization of the amounts of C, Si, and Mn and slow cooling after ferritic and pearlitic transformation, the tensile strength is significantly increased compared to an increase in the yield strength, whereby the yield ratio (YR) decreases.

Furthermore, the present inventors found that by defining the dimensions of the rolled H-shape steel, the finishing temperature of the hot rolling can be set to a sufficiently high temperature, and as a result, refinement of ferrite grain sizes, which increases the yield point, can be suppressed. In addition, the present inventors found that by slow cooling after ferritic and pearlitic transformation, the yield ratio can be suppressed.

The purpose of slow cooling after ferritic and pearlitic transformation is to promote precipitation of VC. In order to promote precipitation of VC, it is important to sufficiently secure the time for retention in a temperature range of 650°C to 550°C. This is because the precipitation rate of VC extremely decreases in a temperature range of lower than 550°C. In addition, the present inventors found that in order to promote the precipitation of VC, it is necessary to control the time for retention in a temperature range of 650°C to 550°C depending on the V content.

In addition, the present inventors found that by controlling both the microstructure at a depth of 100 µm from an outer surface in a flange thickness-direction and the microstructure at a depth of (1/2)t_{f} from the outer surface in the flange thickness-direction (a position at a depth of 1/2 of the thickness t_{f} of the flange from the outer surface in the flange thickness-direction) to contain 95% or more of ferrite and pearlite by area ratio, the difference between the Vickers hardness at the depth of 100 µm from the outer surface in the flange thickness-direction and the Vickers hardness at the depth of (1/2)t_{f} from the outer surface in the flange thickness-direction can be 50 Hv or less.

When the difference in hardness is small, bolt hole piercing is easy, and stress concentration is less likely to occur when an external force such as an earthquake is applied, so that a rolled H-shape steel excellent also in safety is achieved. Here, t_{f} indicates the thickness of the flange.

Hereinafter, a rolled H-shape steel according to an embodiment of the present invention will be described.

First, the chemical composition (steel composition) of the rolled H-shape steel according to this embodiment will be described. "%" of the amount of each element means "mass%" unless otherwise specified.

### (C: 0.10% to 0.25%)

C is an element effective for strengthening steel. In the rolled H-shape steel according to this embodiment, C increases the tensile strength by forming pearlite, which is a hard phase, and promoting precipitation of VC. Therefore, the C content is set to 0.10% or more. The C content is set to preferably 0.17% or more, and more preferably 0.19% or more.

On the other hand, when the C content exceeds 0.25%, the hardness of a heat-affected zone increases and the toughness decreases. Therefore, the C content is set to 0.25% or less. The C content is set to preferably 0.22% or less, and more preferably 0.20% or less.

### (Si: 0.05% to 0.50%)

Si is a deoxidizing element and is an element that also contributes to an increase in strength. In order to increase the tensile strength, in the rolled H-shape steel according to this embodiment, the Si content is set to 0.05% or more. The Si content is set to preferably 0.10% or more, and more preferably 0.15% or more.

On the other hand, when the Si content exceeds 0.50%, martensite-austenite constituent is formed in a weld, and the toughness decreases. Therefore, the Si content is set to 0.50% or less. In order to suppress the decrease in the toughness of the heat-affected zone, the Si content is set to preferably 0.45% or less, and more preferably 0.40% or less.

### (Mn: 0.70% to 1.80%)

Mn is an element that contributes to high-strengthening, and is an element that particularly contributes to hardening of pearlite. In order to increase the tensile strength, in the rolled H-shape steel according to this embodiment, the Mn content is set to 0.70% or more. The Mn content is set to preferably 0.80% or more, more preferably 1.00% or more, and even more preferably 1.20% or more.

On the other hand, when the Mn content exceeds 1.80%, the toughness, cracking properties, and the like of the base metal and the heat-affected zone are impaired. Therefore, the Mn content is set to 1.80% or less. The Mn content is set to preferably 1.40% or less, and more preferably 1.30% or less.

### (V: 0.06% to 0.20%)

V is an element which forms carbide and is an important element for increasing the strength of ferrite-pearlite by precipitation strengthening. In particular, in the rolled H-shape steel according to this embodiment, V suppresses an excessive increase in yield strength and significantly contributes to an increase in tensile strength. Therefore, the V content is set to 0.06% or more. The V content is set to preferably 0.10% or more.

On the other hand, V is an expensive element, and if V is contained in an amount of more than 0.20%, the alloy cost increases. Therefore, the V content is set to 0.20% or less.

In addition, as will be described later, in order to suppress the formation of VN, which contributes to refinement of ferrite grain sizes and a decrease in the amount of precipitated VC, it is necessary to limit the N content and contain Ti.

### (N: 0.0010% to 0.0040%)

N is an element that forms nitride. In order to suppress the refinement of ferrite grain sizes due to the formation of VN and the decrease in the amount of precipitated VC, the N content is set to 0.0040% or less, and preferably 0.0030% or less. The less the N content, the more preferable. However, it is difficult to set the N content to be less than 0.0010%. Therefore, the N content is set to 0.0010% or more, and preferably 0.0020% or more.

### (Ti: 0.003% to 0.015%)

Ti is an element that forms TiN precipitated at a high temperature than VN. In the rolled H-shape steel according to this embodiment, Ti, which has strong affinity to N, is contained in order to prevent the formation of VN. In order to prevent the formation of VN, a sufficient amount of Ti needs to be contained with respect to the N content. As described above, since the N content is 0.0010% or more, the lower limit of the Ti content needs to be 0.003% or more.

On the other hand, when Ti is excessively contained, coarse TiN is formed and the toughness decreases. Therefore, the Ti content is set to 0.015% or less. The Ti content is set to preferably 0.013% or less, and more preferably 0.010% or less.

### (Ca: 0.0003% to Less Than 0.0020%)

Ca is a deoxidizing element and is an element that also contributes to control of the morphology of sulfide. When the Ca content is less than 0.0003%, the elongation decreases or the toughness deteriorates. Therefore, the Ca content is set to 0.0003% or more. The Ca content is set to preferably 0.0005% or more, and more preferably 0.0010% or more.

On the other hand, when the Ca content becomes excessive, Ca becomes the origin of ductile fracture as coarse inclusions and thus decreases the elongation, or Ca becomes the origin of brittle cracks and thus deteriorates the toughness. Therefore, the Ca content is set to be less than 0.0020%. The Ca content is preferably less than 0.0015%.

### (Nb: 0.010% or Less)

Nb is an element that increases the yield strength by precipitation strengthening and refinement of ferrite grain sizes and thus greatly increases the yield ratio (YR). Therefore, in the rolled H-shape steel according to this embodiment, the Nb content is limited to 0.010% or less. The Nb content is set to preferably 0.005% or less. Nb may not be contained, and the lower limit of the Nb content is 0%.

On the other hand, Nb is an element that increases strength and toughness. In a case where Nb is contained in order to obtain this effect, the Nb content is preferably 0.002% or more, and more preferably 0.003% or more.

### (Al: 0.06% or Less)

When Al is contained in an amount of more than 0.06%, coarse inclusions are formed and thus the toughness decreases. Therefore, the Al content is limited to 0.06% or less. The Al content is set to preferably 0.05% or less, and more preferably 0.04% or less. Al may not be contained, and the lower limit of the Al content is 0%.

On the other hand, Al is a deoxidizing element, and may be contained in an amount of 0.01% or more in order to obtain this effect.

### (O: 0.0035% or Less)

O is an impurity. In order to suppress the formation of oxide and secure the toughness, the O content is limited to 0.0035% or less. In order to improve the HAZ toughness, it is preferable to set the O content to 0.0015% or less.

On the other hand, the O content may be 0%. However, when the O content is controlled to be less than 0.0005%, the manufacturing cost increases. Therefore, the lower limit of the O content may be 0.0005%.

Furthermore, in order to increase the tensile strength and control the morphology of inclusions, in addition to the elements described above, the rolled H-shape steel of the present invention may selectively contain one or two or more of Cu: 0.30% or less, Ni: 0.20% or less, Mo: 0.30% or less, and Cr: 0.05 or less, or may not contain the elements. Since the elements may not be contained, the lower limit of the amount of each of the elements is 0%.

### (Cu: 0% to 0.30%)

Cu is an element that contributes to an increase in strength. In a case of obtaining this effect, Cu is preferably contained in an amount of 0.01% or more. The Cu content is more preferably 0.05% or more, and even more preferably 0.10% or more.

On the other hand, when the Cu content exceeds 0.30%, the strength excessively increases, and the low temperature toughness decreases in some cases. Therefore, even in a case where Cu is contained, the Cu content is set to 0.30% or less. The Cu content is set to more preferably 0.20% or less.

### (Ni: 0% to 0.20%)

Ni is an element effective for increasing strength and toughness. In a case of obtaining this effect, Ni is preferably contained in an amount of 0.01% or more. The Ni content is more preferably 0.05% or more, and even more preferably 0.10% or more.

On the other hand, Ni is an expensive element, and in order to suppress an increase in the alloy cost, the Ni content is set to 0.20% or less even in a case where Ni is contained. The Ni content is set to preferably 0.15% or less.

### (Mo: 0% to 0.30%)

Mo is an element that contributes to an increase in strength. In a case of obtaining this effect, the Mo content is preferably 0.01% or more.

On the other hand, when the Mo content exceeds 0.30%, Mo carbide (Mo₂C) precipitates and the toughness of the heat-affected zone deteriorates in some cases. Therefore, even in a case where Mo is contained, the Mo content is set to 0.30% or less. The Mo content is preferably 0.25% or less.

### (Cr: 0% to 0.05%)

Cr is also an element that contributes to an increase in strength. In a case of obtaining this effect, the Cr content is preferably 0.01% or more.

On the other hand, when the Cr content exceeds 0.05%, there may be cases where carbide is formed and the toughness is impaired. Therefore, even in a case where Cr is contained, the Cr content is limited to 0.05% or less. The Cr content is preferably 0.03% or less.

Furthermore, the rolled H-shape steel according to this embodiment may contain, in addition to the above-described elements, REM: 0.010% or less and/or Mg: 0.010% or less, or REM and Mg may not be contained. Since the elements may not be contained, the lower limits of the REM content and the Mg content are 0%.

### (REM: 0% to 0.010%)

REM is a deoxidizing element and also contributes to control of the morphology of sulfide, so that REM may be contained as necessary. In a case of obtaining this effect, REM is preferably contained in an amount of 0.0005% or more. However, since oxide of REM easily floats in molten steel, the REM content in the steel is set to 0.010% or less even in a case where REM is contained.

REM (rare-earth metal) refers to a generic term for two elements, scandium (Sc) and yttrium (Y), and 15 elements (lanthanoids) from lanthanum (La) to lutetium (Lu). These elements may be contained singly or may be a mixture.

### (Mg: 0 to Less Than 0.0030%)

Mg is a deoxidizing element and is an element that also contributes to control of the morphology of sulfide. In a case of obtaining this effect, it is preferable to set the Mg content to 0.0003% or more.

On the other hand, when the Mg content becomes excessive, Mg becomes the origin of ductile fracture as coarse inclusions and thus the elongation is decreased, or Ca becomes the origin of brittle cracks and thus the toughness deteriorated. Therefore, even in a case where Mg is contained, the Mg content is set to be less than 0.0030%. The Mg content is preferably 0.0020% or less.

The amounts of P and S, which are contained as impurities, are not particularly limited. P and S cause weld cracking and the decrease in toughness due to solidifying segregation, and thus have to be reduced in amount as much as possible. The P content is preferably limited to 0.020% or less, and a more preferable upper limit thereof is 0.002% or less. In addition, the S content is preferably limited to 0.002% or less.

Next, the microstructure and mechanical properties of the rolled H-shape steel according to this embodiment will be described.

The rolled H-shape steel according to this embodiment is manufactured by performing air cooling after hot rolling. Therefore, the microstructure becomes ferrite-pearlite as described later. In addition to the ferrite-pearlite, a mixture of martensite and austenite (martensite-austenite constituent (MA)) may be formed, but the area ratio thereof is 5% or less. The microstructure of the rolled H-shape steel according to this embodiment contains the ferrite-pearlite and the residual structure (MA) in an area ratio of 5% or less, and the area ratio of the ferrite-pearlite is 95% or more. The ferrite-pearlite refers to a structure in which ferrite and pearlite are mixed.

(At (1/6)F Position from Outer Edge Surface in Flange Width-Direction, Microstructure at Depth of 100 µm from Outer Surface in Flange Thickness-Direction and Microstructure at Depth of (1/2)t_{f} from Outer Surface in Flange Thickness-Direction: 95% or More of Ferrite and Pearlite and 5% or Less of Residual Structure by Area Ratio)

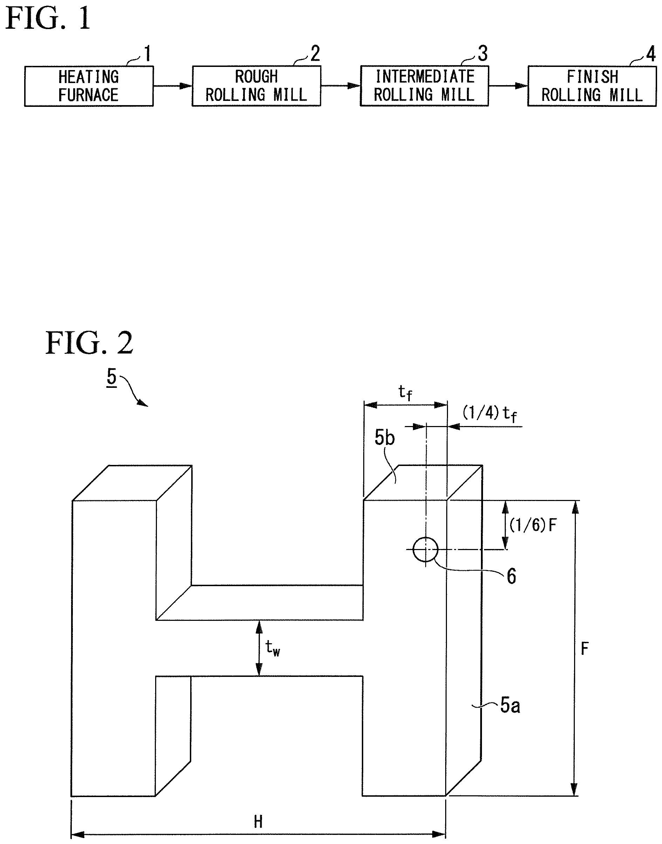

As shown in FIG. 2, in a case where the width of a flange is referred to as F and the thickness of the flange is referred to as t_{f}, in the rolled H-shape steel according to this embodiment, at a position away from an outer edge surface in a flange width-direction 5b by (1/6)F, the microstructure at a depth of 100 µm from an outer surface in a flange thickness-direction 5a (leftward direction in FIG. 2) of the flange, and the microstructure at a position at a depth of (1/2)t_{f} from the outer surface in the flange thickness-direction 5a in the thickness direction of the flange (that is, the thickness middle portion of the flange) have 95% or more in total of ferrite and pearlite and 5% or less of the residual structure by area ratio.

In order to reduce the difference in hardness between the microstructure at the depth of 100 µm from the outer surface in the flange thickness-direction 5a (hereinafter, sometimes referred to as a flange outer surface portion structure) and the microstructure at a position at the depth of (1/2)t_{f} from the outer surface in the flange thickness-direction 5a (hereinafter, sometimes referred to as a flange middle portion structure) and secure bolt hole piercing properties, it is necessary to suppress the formation of martensite and bainite which have high hardness and are inferior in bolt hole piercing properties. Specifically, it is necessary to control both the flange outer surface portion structure and the flange middle portion structure to be a structure containing 95% or more of ferrite and pearlite and 5% or less of the residual structure by area ratio. When the area ratio of ferrite and pearlite in the structure at any of the positions is less than 95%, the difference in hardness between the outer surface and the inner portion of the flange increases, the hardness of the surface layer increases, and the bolt hole piercing properties deteriorate. In addition, stress concentration occurs due to the difference in hardness, resulting in the deterioration of brittle fracture resistance.

The t_{f} is the thickness of the flange and the outer surface in the flange thickness-direction 5a is, as shown in FIG. 2, one surface in the thickness direction of the flange and a surface that is not in contact with the web.

The residual structure of the rolled H-shape steel according to this embodiment is a mixture of martensite and austenite (MA).

In the rolled H-shape steel according to this embodiment, the observation of the microstructure is performed on a region (observation visual field) within a rectangle of 500 µm (rolling direction) × 400 µm (flange thickness direction) using an optical microscope. The observation position of the microstructure will be described with reference to FIG. 2. In FIG. 2, the width of the flange is denoted by F, and the thickness of the flange is denoted by t_{f}.

As the flange outer surface portion structure, in a rolled H-shape steel 5 shown in FIG. 2, the microstructure at a position of (1/6)F from the outer edge surface in the flange width-direction 5b and at the depth of 100 µm from the outer surface in the flange thickness-direction 5a is observed. In addition, as the flange middle portion structure, in the rolled H-shape steel 5 shown in FIG. 2, the microstructure at (1/6)F from the outer edge surface in the flange width-direction 5b and at the depth of (1/2)t_{f} from the outer surface in the flange thickness-direction 5a is observed. At each of the observation positions, the area ratio of each structure in the above-described observation visual field is measured by image analysis. Identification of each structure can be performed by a general method. For example, a white phase exposed by LePera etchant is determined as MA, and the area ratio of the MA is measured. Thereafter, among the structures exposed by Nital etchant, a white phase and a black phase are respectively determined as ferrite and pearlite structures, and the area ratio thereof is taken as the area ratio of ferrite and pearlite.

(At (1/6)F Position from Outer Edge Surface in Flange Width-Direction, Difference between Vickers Hardness at Depth of 100 µm from Outer Surface in Flange Thickness-Direction and Vickers Hardness at Depth of (1/2)t_{f} from Outer Surface in Flange Thickness-Direction: 50 Hv or Less)

When the difference between the Vickers hardness at a depth of 100 µm from the outer surface in the flange thickness-direction and the Vickers hardness at a depth of (1/2)t_{f} from the outer surface in the flange thickness-direction is large, the hardness of the surface layer increases, and the bolt hole piercing properties deteriorate. In addition, stress concentration occurs due to the difference in hardness, which causes brittle fracture during an earthquake. Therefore, the difference between the Vickers hardness at the depth of 100 µm from the outer surface in the flange thickness-direction and the Vickers hardness at the depth of (1/2)t_{f} from the outer surface in the flange thickness-direction is set to 50 Hv or less.

The Vickers hardness is based on JIS Z 2244 (2009) with a load (test force) of 20 kgf. As the hardness of each position, a value obtained by conducting a test on five points for each position and averaging the values is used.

That is, the Vickers hardness at the depth of 100 µm from the outer surface in the flange thickness-direction 5a at the (1/6)F position from the outer edge surface in the flange width-direction 5b is measured at five points, and the average value thereof is taken as the Vickers hardness at the depth of 100 µm from the outer surface in the flange thickness-direction. In addition, the Vickers hardness at a position at the depth of (1/2)t_{f} from the outer surface in the flange thickness-direction 5a at the (1/6)F position from the outer edge surface in the flange width-direction 5b is measured at five points, and the average value thereof is taken as the Vickers hardness at the depth of (1/2)t_{f} from the outer surface in the flange thickness-direction.

Next, the mechanical properties of the flange will be described below. The tensile properties defined in the rolled H-shape steel according to this embodiment are the mechanical properties obtained by conducting a mechanical test at room temperature. In this specification, room temperature indicates, for example, 20°C.

### (Yield Point (Yield Strength): 385 to 505 N/mm²)

An excessive yield point causes an increase in yield ratio, and as will be described later, when anti-earthquake design or the like is made, the degree of freedom of design decreases in some cases. Therefore, the yield strength is set to 505 N/mm² or less. On the other hand, in designing a structure particularly with a large span, the yield strength needs to be 385 N/mm² or more. Therefore, the yield strength is set to 385 N/mm² or more.

### (Tensile Strength: 550 to 670 N/mm²)

In order to use a structure with a large span without final fracture, the tensile strength needs to be 550 N/mm² or more. Therefore, the tensile strength is set to 550 N/mm² or more. However, when the tensile strength is too high, delayed cracking of welds easily occurs. Therefore, the tensile strength is set to 670 N/mm² or less.

### (Yield Ratio: 0.80 or Less)

In order to prevent the collapse of building structures by allowing plastic deformation at the end section of a beam during an earthquake and consuming the input energy of the earthquake, it is necessary to secure the plastic deformability by reducing the yield ratio. Therefore, in order to secure a certain degree of plastic deformability, the yield ratio is set to 0.80 or less.

### (Elongation: 16.0% or More)

In order to prevent the collapse of building structures by allowing plastic deformation at the end section of a beam during an earthquake and consuming the input energy of the earthquake, it is necessary to secure the plastic deformability such as elongation as an index. Therefore, the elongation is set to 16.0% or more.

### (V-notch Charpy Absorbed Energy at 0°C: 70 J or More)

In order to prevent the brittle fracture of structures during an earthquake, the V-notch Charpy absorbed energy at 0°C needs to be sufficiently high. Therefore, the V-notch Charpy absorbed energy at 0°C is set to 70 J or more. In a structure assembled by welding, the V-notch Charpy absorbed energy at 0°C needs to be sufficiently high even at a heat-affected zone (weld). Therefore, the V-notch Charpy absorbed energy at 0°C in a weld is also set to 70 J or more.

Next, collecting positions of test pieces for measuring the mechanical properties of the flange described above will be described with reference to FIG. 2. In FIG. 2, the width of the flange is denoted by F, and the thickness of the flange is denoted by t_{f}.

In this embodiment, a test piece having (1/4)t_{f} from the outer surface in the flange thickness-direction 5a in FIG. 2 and the (1/6)F position 6 from the outer edge surface in the flange width-direction 5b as the central axis and having the rolling direction as its longitudinal direction is collected, and mechanical tests (a tension test and a Charpy impact test) are conducted thereon. A tension test piece is a No. 4 test piece described in JIS Z 2241 (2011), and a Charpy impact test piece is a V-notch test piece having a notch shape described in JIS Z 2242 (2005). The length direction of the V-notch (notch) of the Charpy impact test piece is parallel to the flange thickness direction.

The mechanical properties of the flange fluctuate with the width direction and the thickness direction of the flange. The mechanical properties at (1/4)t_{f} from the outer surface in the flange thickness-direction 5a and a (1/6)F position 6 from the outer edge surface in the flange width-direction 5b in FIG. 2 are measured because the (1/6)F position 6 is near the middle between the flange tip end, at which the temperature is lowest during rolling, and the flange middle and is a position that may be regarded as a standard portion for a strength test according to JIS, EN, and ASTM standards, and the position 6 is considered to represent the average structure and material of the rolled H-shape steel.

Next, the dimensions of the rolled H-shape steel according to this embodiment will be described.

The dimensions of the rolled H-shape steel according to this embodiment affect the constraint of manufacturing conditions and also affect the mechanical properties. That is, the dimensions of the rolled H-shape steel according to this embodiment cannot be easily changed depending on the requirements of structure design, and are important requirements that have to be controlled in order to obtain the rolled H-shape steel according to this embodiment.

### (Height: 700 to 1000 mm)

In order to manufacture a rolled H-shape steel having a large height (the height of the H-shape steel), it is necessary to increase the number of rolling passes. In this case, the rolling time increases and the temperature of the material decreases during rolling and thus the rolling cannot be completed at a high temperature. In the manufacturing of the rolled H-shape steel according to this embodiment, it is necessary to suppress refinement of ferrite grain sizes, which increases the yield ratio, by performing rolling at a sufficiently high temperature. In addition, when the height is too large, during air cooling after rolling, the effect of slow cooling due to radiant heat from faced flange is not obtained. Therefore, the height is set to 1000 mm or less.

A rolled H-shape steel applied to a large span structure needs a height of 700 mm or more. Therefore, the height is set to 700 mm or more.

### (Flange Width: 200 to 400 mm)

In order to manufacture a rolled H-shape steel having a large flange width, it is necessary to increase the number of rolling passes. In this case, the rolling time increases and the temperature of the material decreases during rolling and thus the rolling cannot be completed at a high temperature. In addition, when the flange width is large, the cooling efficiency during air cooling increases, and ferrite is refined, resulting in an increase in yield ratio. In the manufacturing of the rolled H-shape steel according to this embodiment, it is necessary to suppress refinement of ferrite grain sizes, which increases the yield ratio, by performing rolling at a sufficiently high temperature. Therefore, the flange width is set to 400 mm or less.

A rolled H-shape steel applied to a large span structure needs to have a flange width of 200 mm or more. Therefore, the flange width is set to 200 mm or more.

### (Flange Thickness: 22 to 40 mm)

In order to manufacture a rolled H-shape steel having a small flange thickness, it is necessary to increase the number of rolling passes. In this case, the rolling time increases, so that the temperature of the material decreases during rolling and thus the rolling cannot be completed at a high temperature. In addition, when a reduction in the flange thickness is attempted, a large number of rolling passes are applied, and ferrite is refined. Furthermore, when the flange thickness is small, the cooling efficiency during air cooling increases, and the cooling rate increases, so that ferrite is refined and the yield ratio increases. In the manufacturing of the rolled H-shape steel according to this embodiment, it is necessary to suppress refinement of ferrite grain sizes, which increases the yield ratio, by performing rolling at a sufficiently high temperature. Therefore, the flange thickness is set to 22 mm or more.

When the flange thickness exceeds 40 mm, the structure is coarsened due to insufficient reduction, whereby the toughness deteriorates. Therefore, the flange thickness is set to 40 mm or less.

### (Web Thickness: 16 mm or More)

In order to manufacture a rolled H-shape steel having a small web thickness, it is necessary to increase the number of rolling passes. In this case, the rolling time increases and the temperature of the material decreases during rolling and thus the rolling cannot be completed at a high temperature. In the manufacturing of the rolled H-shape steel according to this embodiment, it is necessary to suppress refinement of ferrite grain sizes, which increases the yield ratio of the flange, by performing rolling at a sufficiently high temperature. Therefore, the web thickness is set to 16 mm or more.

Although the upper limit thereof is not particularly provided, in general, rolled H-shape steels having a web thickness of up to 22 mm are widely used.

The rolled H-shape steel according to this embodiment described above is a rolled H-shape steel manufactured without using an accelerating cooling apparatus, which requires investment of large-scale facilities, and is a rolled H-shape steel having a strength as high as TS ≥ 550 N/mm², a yield ratio as low as YR ≤ 0.80, excellent elongation, and excellent weldability. When the rolled H-shape steel according to this embodiment is used, for example, in a case where the rolled H-shape steel is used for buildings, a reduction in the amount of steel used, a reduction in construction costs for welding, inspection, and the like, and a significant reduction in costs due to a reduction in the construction period can be achieved. In addition, with the rolled H-shape steel according to this embodiment, since the difference in hardness between the position at the depth of 100 µm from the outer surface in the flange thickness-direction and the position at the depth of (1/2)t_{f} from the outer surface in the flange thickness-direction is small, brittle fracture during an earthquake due to stress concentration and a difficulty in bolt hole piercing due to excessive outer surface hardness can be avoided.

Next, a manufacturing method of the rolled H-shape steel according to this embodiment will be described.

The rolled H-shape steel according to this embodiment is obtained by manufacturing a slab by casting molten steel, heating the slab, then performing hot rolling on the slab to form an H-shape steel, and performing air cooling on the H-shape steel after the hot rolling without water cooling.

In a steelmaking process, the chemical composition of the molten steel is adjusted to achieve the above-described chemical composition, and thereafter the molten steel is cast to obtain the slab. As the casting, continuous casting is preferable from the viewpoint of productivity.

### (Length of Slab: 7.0 m or Less)

The longer the length of the slab, the better the productivity and yield. Therefore, it is generally considered that the production facility and transport capacity are desirably as large as possible. However, when the slab is long, the time for the material to pass through rolling rolls, that is, the rolling time increases, and accordingly a reduction in the temperature during rolling increases.

In the manufacturing method of the rolled H-shape steel according to this embodiment, it is necessary to suppress refinement of ferrite grain sizes, which causes an increase in the yield ratio, by rolling the slab at a sufficiently high temperature. Therefore, the length of the slab is set to 7.0 m or less.

When the length of the slab is too short, workability of extraction from a heating furnace, conveyance properties to rolling, yield, productivity, and the like deteriorate. Therefore, the length of the slab is preferably set to 5.0 m or more.

The thickness of the slab is preferably set to 200 mm or more from the viewpoint of productivity. On the other hand, the thickness of the slab is preferably 350 mm or less in consideration of a reduction in the degree of segregation, homogeneity of the heating temperature during the hot rolling, and the like.

The width of the slab is preferably 1200 to 2000 mm. When the width of the slab is lower than 1200 mm, the number of rolling passes for shaping increases, and a reduction in the temperature during the rolling increases. In this case, ferrite is refined and the yield ratio tends to increase. In addition, when the width thereof exceeds 2000 mm, there may be cases where the surface area thereof increases and a reduction in the temperature becomes significant.

Next, hot rolling is performed after heating the slab. In this embodiment, as shown in FIG. 1, the slab is heated using a heating furnace 1. Subsequently, rough rolling is performed by using a rough rolling mill 2. Rough rolling is a step performed as necessary before intermediate rolling using an intermediate rolling mill 3, and is performed depending on the thickness of the slab and the thickness of a product. Thereafter, intermediate rolling is performed using an intermediate rolling mill 3 (intermediate universal rolling mill). Subsequently, the hot rolling is completed by performing finish rolling using a finish rolling mill 4, and air cooling is performed after the completion of the hot rolling. As long as the finishing temperature can be secured, a water cooling apparatus may be provided between passes before and after the intermediate rolling mill 3, and spray cooling and reverse rolling on the flange outer surface side may be performed using the intermediate rolling mill 3 and the water cooling apparatus between the passes before and after the intermediate rolling mill 3.

### (Heating Temperature: 1200°C to 1350°C)

When the heating temperature of the slab in the heating furnace 1 is lower than 1200°C, it becomes difficult to finish the rolling at a high temperature as described below. In addition, it becomes difficult to cause elements that form precipitates, such as V, to be sufficiently solid soluted. Therefore, the heating temperature of the slab is set to 1200°C or higher.

On the other hand, when the heating temperature exceeds 1350°C, the yield decreases due to the promotion of oxidation of the surface. In addition, oxide on the surface of the slab, which is the material, may be melted and the inside of the heating furnace may be damaged. Therefore, the heating temperature is set to 1350°C or lower.

### (Finishing Temperature of Hot Rolling: 850°C or Higher)

The hot rolling may be performed in a typical method. However, the finishing temperature of the hot rolling in the finish rolling mill 4 is set to 850°C or higher at the (1/6)F position from the outer surface of the flange in order to suppress excessive refinement of ferrite grain sizes. Rough rolling may be performed before the hot rolling depending on the thickness of the slab and the thickness of the product.

As the cooling after the hot rolling, air cooling is performed without using a water cooling apparatus. VC precipitates mainly in a temperature range from 650°C to 550°C, in which ferritic and pearlitic transformation is almost completed. Therefore, in order to cause VC to precipitate, at the (1/6)F position of the outer surface of the flange, slow cooling is performed at an average cooling rate of, for example, about 3 °C/s or less in a temperature range of at least 650°C to 550°C. With the dimensions of the rolled H-shape steel according to this embodiment, the cooling rate is about 3 °C/s or less due to the air cooling.

Preferably, in order to reliably cause VC to precipitate, it is preferable to perform air cooling to 200°C or lower. By performing the air cooling after the rolling, the structure does not contain bainite and martensite but contains ferrite, pearlite, and a small amount of MA.

In order to perform appropriate slow cooling for precipitation of VC, a height of 700 to 1000 mm, a flange width of 200 to 400 mm, and a flange thickness of 22 to 40 mm are necessary.

The rolled H-shape steel manufactured by the method described above is a rolled H-shape steel manufactured without using an accelerating cooling apparatus, which requires investment of large-scale facilities, has a strength as high as TS ≥ 550 N/mm², a yield ratio as low as YR ≤ 0.80, excellent elongation, and excellent weldability.

### [Examples]

Steel having a composition shown in Table 1 was melted, cast into a width of 1280 to 1800 mm and a thickness of 240 to 300 mm by continuous casting, and cut into lengths shown in Tables 2 and 3, whereby a slab was manufactured. The steel was melted in a converter, was subjected to primary deoxidation, was adjusted in composition by adding alloying elements thereto, and was subjected to vacuum degassing as necessary. The obtained slab was heated, was heated to heating temperatures shown in Tables 2 and 3, and was subjected to rough rolling using a rough rolling mill. Subsequently, spray cooling of a flange of the outer surface and reverse rolling were performed using an intermediate universal rolling mill and a water cooling apparatus arranged between passes provided before and after the intermediate universal rolling mill. Thereafter, the hot rolling was completed by performing finish rolling at finishing temperatures shown in Tables 2 and 3, and cooling was performed under cooling conditions shown in Tables 2 and 3, whereby a rolled H-shape steel was manufactured. In Tables 2 and 3, water cooling absent means that air cooling was performed as the cooling.

The elements shown in Table 1 are chemical analysis values of samples collected from molten steel after vacuum degassing. The elements of a product are substantially the same as the elements of the molten steel. In both cases, the P content was 0.020% or less, and the S content was 0.002% or less.

**[Table 1]**

| Steel kind symbol | Composition (mass%) remainder including Fe and impurities | | | | | | | | | | | | | | | |
|---|---|---|---|---|---|---|---|---|---|---|---|---|---|---|---|---|
| | C | Si | Mn | V | Nb | Al | Ti | O | N | Cu | Ni | Mo | Cr | REM | Ca | Mg |
| A | 0.17 | 0.33 | 1.22 | 0.13 | | 0.02 | 0.004 | 0.0021 | 0.0033 | | | | | | 0.0015 | |
| B | 0.11 | 0.32 | 1.21 | 0.13 | | 0.02 | 0.004 | 0.0022 | 0.0034 | | | | 0.03 | | 0.0013 | |
| C | 0.23 | 0.33 | 1.23 | 0.13 | | 0.02 | 0.005 | 0.0020 | 0.0033 | | | | 0.04 | | 0.0016 | |
| D | 0.17 | 0.06 | 1.68 | 0.13 | | 0.02 | 0.004 | 0.0021 | 0.0031 | | | | | | 0.0014 | |
| E | 0.15 | 0.42 | 0.89 | 0.13 | | 0.02 | 0.004 | 0.0029 | 0.0033 | | | | | | 0.0015 | |
| F | 0.17 | 0.33 | 0.80 | 0.12 | | 0.02 | 0.004 | 0.0024 | 0.0034 | | | | | | 0.0014 | |
| G | 0.11 | 0.33 | 1.79 | 0.12 | | 0.02 | 0.004 | 0.0019 | 0.0029 | | | | | | 0.0015 | |
| H | 0.18 | 0.33 | 1.22 | 0.07 | | 0.02 | 0.005 | 0.0021 | 0.0033 | | | | | | 0.0013 | |
| I | 0.11 | 0.21 | 1.71 | 0.19 | | 0.03 | 0.004 | 0.0019 | 0.0032 | | | | | | 0.0015 | |
| J | 0.18 | 0.29 | 1.22 | 0.13 | | 0.02 | 0.004 | 0.0031 | 0.0013 | | | | 0.04 | | 0.0014 | |
| K | 0.11 | 0.30 | 1.20 | 0.13 | | 0.02 | 0.004 | 0.0021 | 0.0039 | | | | 0.04 | | 0.0015 | |
| L | 0.12 | 0.12 | 1.22 | 0.13 | | 0.02 | 0.014 | 0.0021 | 0.0039 | | | | 0.04 | | 0.0014 | |
| M | 0.12 | 0.25 | 1.19 | 0.11 | | 0.02 | 0.003 | 0.0020 | 0.0024 | 0.04 | | | 0.03 | | 0.0016 | |
| N | 0.10 | 0.20 | 0.99 | 0.09 | | 0.02 | 0.004 | 0.0020 | 0.0031 | | 0.19 | | 0.04 | | 0.0015 | |
| O | 0.17 | 0.33 | 1.22 | 0.13 | | 0.02 | 0.004 | 0.0021 | 0.0033 | | | 0.29 | 0.04 | | 0.0015 | |
| P | 0.17 | 0.32 | 1.21 | 0.13 | | 0.02 | 0.004 | 0.0018 | 0.0030 | | | | | 0.009 | 0.0004 | |
| Q | 0.14 | 0.32 | 1.20 | 0.13 | | 0.01 | 0.003 | 0.0017 | 0.0032 | | | | | | 0.0019 | |
| R | 0.17 | 0.33 | 1.23 | 0.12 | | 0.02 | 0.004 | 0.0020 | 0.0034 | | | | | | 0.0011 | |
| s | 0.16 | 0.33 | 1.23 | 0.12 | 0.004 | 0.02 | 0.004 | 0.0019 | 0.0021 | | | | | | 0.0016 | |
| T | 0.16 | 0.31 | 1.21 | 0.13 | | 0.02 | 0.004 | 0.0020 | 0.0031 | 0.04 | | | | | 0.0011 | |
| U | 0.15 | 0.31 | 1.21 | 0.13 | | 0.02 | 0.004 | 0.0020 | 0.0029 | | 0.18 | | | | 0.0012 | |
| V | 0.16 | 0.31 | 1.01 | 0.13 | | 0.02 | 0.004 | 0.0020 | 0.0031 | | | 0.29 | | | 0.0011 | |
| W | 0.16 | 0.30 | 1.08 | 0.14 | | 0.02 | 0.004 | 0.0020 | 0.0031 | | | 0.29 | 0.04 | | 0.0011 | |
| X | 0.17 | 0.30 | 1.23 | 0.12 | | 0.02 | 0.004 | 0.0019 | 0.0032 | | | | | 0.009 | 0.0011 | |
| Y | 0.17 | 0.33 | 1.20 | 0.13 | | 0.02 | 0.004 | 0.0023 | 0.0034 | 0.06 | | | | | 0.0013 | |
| Z | 0.16 | 0.34 | 1.23 | 0.12 | | 0.03 | 0.005 | 0.0016 | 0.0031 | | 0.19 | | | | 0.0014 | |
| AA | 0.14 | 0.25 | 1.19 | 0.11 | | 0.01 | 0.004 | 0.0021 | 0.0033 | | | 0.29 | | | 0.0014 | |
| AB | 0.14 | 0.16 | 1.06 | 0.13 | | 0.02 | 0.004 | 0.0016 | 0.0033 | | | | 0.04 | | 0.0015 | |
| AC | 0.13 | 0.32 | 1.21 | 0.13 | | 0.02 | 0.004 | 0.0014 | 0.0033 | | | | | 0.009 | 0.0009 | |
| AD | 0.14 | 0.33 | 1.22 | 0.13 | | 0.03 | 0.004 | 0.0013 | 0.0033 | | | | | | 0.0019 | |
| AE | 0.18 | 0.32 | 1.33 | 0.06 | | 0.02 | 0.003 | 0.0017 | 0.0031 | | | | | | 0.0015 | |
| AF | 0.10 | 0.21 | 1.21 | 0.12 | | 0.04 | 0.010 | 0.0031 | 0.0020 | 0.01 | 0.01 | 0.29 | 0.01 | | 0.0004 | |
| AI | 0.16 | 0.32 | 1.23 | 0.13 | | 0.02 | 0.004 | 0.0020 | 0.0031 | | | | | | 0.0003 | 0.0018 |
| AG | 0.16 | 0.32 | 1.22 | 0.12 | | 0.02 | 0.004 | 0.0021 | 0.0033 | | | | | | 0.0015 | |
| BB | 0.08 | 0.31 | 1.20 | 0.13 | | 0.02 | 0.004 | 0.0022 | 0.0032 | | | | | | 0.0014 | |
| CC | 0.26 | 0.34 | 1.23 | 0.12 | | 0.03 | 0.005 | 0.0020 | 0.0033 | | | | | | 0.0015 | |
| DD | 0.17 | 0.04 | 1.20 | 0.13 | | 0.02 | 0.004 | 0.0023 | 0.0034 | | | | | | 0.0013 | |
| EE | 0.17 | 0.52 | 1.24 | 0.12 | | 0.03 | 0.005 | 0.0019 | 0.0032 | | | | | | 0.0015 | |
| FF | 0.16 | 0.31 | 0.61 | 0.12 | | 0.02 | 0.004 | 0.0024 | 0.0031 | | | | | | 0.0013 | |
| GG | 0.15 | 0.34 | 1.92 | 0.12 | | 0.02 | 0.004 | 0.0020 | 0.0033 | | | | | | 0.0015 | |
| HH | 0.16 | 0.31 | 1.20 | 0.01 | | 0.02 | 0.004 | 0.0023 | 0.0034 | | | | | | 0.0013 | |
| II | 0.15 | 0.34 | 1.24 | 0.26 | | 0.03 | 0.005 | 0.0020 | 0.0033 | | | | | | 0.0015 | |
| JJ | 0.16 | 0.30 | 1.23 | 0.12 | 0.016 | 0.03 | 0.005 | 0.0015 | 0.0029 | | | | | | 0.0012 | |
| KK | 0.18 | 0.35 | 1.24 | 0.13 | | 0.07 | 0.004 | 0.0016 | 0.0031 | | | | | | 0.0018 | |
| LL | 0.17 | 0.34 | 1.23 | 0.12 | | 0.02 | 0.016 | 0.0015 | 0.0030 | | | | | | 0.0019 | |
| MM | 0.14 | 0.28 | 1.20 | 0.13 | | 0.02 | 0.004 | 0.0040 | 0.0030 | | | | | | 0.0012 | |
| NN | 0.12 | 0.31 | 1.19 | 0.11 | | 0.02 | 0.003 | 0.0021 | 0.0049 | | | | | | 0.0025 | |
| OA | 0.17 | 0.30 | 1.21 | 0.13 | | 0.02 | 0.004 | 0.0029 | 0.0030 | | | | | | 0.0002 | |
| OB | 0.17 | 0.36 | 1.23 | 0.13 | | 0.02 | 0.004 | 0.0019 | 0.0034 | | | | | | 0.0029 | |
| AH | 0.16 | 0.31 | 1.22 | 0.13 | | 0.02 | 0.004 | 0.0021 | 0.0047 | | | | | | 0.0015 | |

| | | | | | | | | | | | | | | | | |
|---|---|---|---|---|---|---|---|---|---|---|---|---|---|---|---|---|
| Underlined means outside the range of the present invention. Blanks mean not intentionally added. | | | | | | | | | | | | | | | | |

**[Table 2]**

| No | Steel kind symbol | Slab length | Heating temperature | Finishing temperature | Flange outer surface water cooling after rolling | Height | Flange width | Flange thickness | Web thickness | Classification |
|---|---|---|---|---|---|---|---|---|---|---|
| | | [m] | [°C] | [°C] | | [mm] | [mm] | [mm] | [mm] | |
| 1 | A | 6.0 | 1290 | 882 | Absent | 900 | 400 | 40 | 19 | Example |
| 2 | B | 6.0 | 1220 | 852 | Absent | 900 | 400 | 40 | 19 | Example |
| 3 | C | 6.0 | 1310 | 882 | Absent | 900 | 400 | 40 | 19 | Example |
| 4 | D | 6.0 | 1290 | 880 | Absent | 900 | 400 | 40 | 19 | Example |
| 5 | E | 6.0 | 1320 | 879 | Absent | 900 | 400 | 40 | 19 | Example |
| 6 | F | 6.0 | 1290 | 863 | Absent | 900 | 400 | 40 | 19 | Example |
| 7 | G | 6.0 | 1280 | 860 | Absent | 900 | 400 | 40 | 19 | Example |
| 8 | H | 6.0 | 1290 | 862 | Absent | 900 | 400 | 40 | 19 | Example |
| 9 | I | 6.0 | 1310 | 859 | Absent | 900 | 400 | 40 | 19 | Example |
| 10 | J | 6.0 | 1310 | 882 | Absent | 900 | 400 | 40 | 19 | Example |
| 11 | K | 6.0 | 1290 | 882 | Absent | 900 | 400 | 40 | 19 | Example |
| 12 | L | 6.0 | 1300 | 883 | Absent | 900 | 400 | 40 | 19 | Example |
| 13 | M | 6.0 | 1300 | 881 | Absent | 900 | 400 | 40 | 19 | Example |
| 14 | N | 6.0 | 1290 | 882 | Absent | 900 | 400 | 40 | 19 | Example |
| 15 | O | 6.0 | 1310 | 874 | Absent | 900 | 400 | 40 | 19 | Example |
| 16 | P | 6.0 | 1310 | 861 | Absent | 900 | 400 | 40 | 19 | Example |
| 17 | Q | 6.0 | 1290 | 860 | Absent | 900 | 400 | 40 | 19 | Example |
| 18 | R | 6.0 | 1280 | 880 | Absent | 900 | 400 | 40 | 19 | Example |
| 19 | S | 6.0 | 1280 | 883 | Absent | 900 | 400 | 40 | 19 | Example |
| 20 | T | 6.0 | 1280 | 881 | Absent | 900 | 400 | 40 | 19 | Example |
| 21 | U | 6.0 | 1280 | 881 | Absent | 900 | 400 | 40 | 19 | Example |
| 22 | V | 6.0 | 1280 | 882 | Absent | 900 | 400 | 40 | 19 | Example |
| 23 | W | 6.0 | 1290 | 883 | Absent | 900 | 400 | 40 | 19 | Example |
| 24 | X | 6.0 | 1290 | 883 | Absent | 900 | 400 | 40 | 19 | Example |
| 25 | Y | 6.0 | 1290 | 850 | Absent | 900 | 400 | 40 | 19 | Example |
| 26 | Z | 6.0 | 1290 | 880 | Absent | 900 | 400 | 40 | 19 | Example |
| 27 | AA | 6.0 | 1290 | 881 | Absent | 900 | 400 | 40 | 19 | Example |
| 28 | AB | 6.0 | 1300 | 876 | Absent | 900 | 400 | 40 | 19 | Example |
| 29 | AC | 6.0 | 1285 | 865 | Absent | 900 | 400 | 40 | 19 | Example |
| 30 | AD | 6.0 | 1290 | 869 | Absent | 900 | 400 | 40 | 19 | Example |
| 31 | A | 6.0 | 1290 | 890 | Absent | 700 | 400 | 40 | 19 | Example |
| 32 | A | 6.0 | 1300 | 870 | Absent | 1000 | 400 | 40 | 19 | Example |
| 33 | A | 6.0 | 1280 | 891 | Absent | 900 | 200 | 40 | 19 | Example |
| 34 | A | 6.0 | 1290 | 882 | Absent | 900 | 400 | 22 | 19 | Example |
| 35 | A | 6.0 | 1290 | 879 | Absent | 900 | 400 | 40 | 16 | Example |
| 36 | AI | 6.0 | 1290 | 881 | Absent | 900 | 400 | 40 | 19 | Example |
| 37 | A | 6.5 | 1290 | 870 | Absent | 900 | 400 | 40 | 19 | Example |
| 38 | A | 6.8 | 1290 | 865 | Absent | 900 | 400 | 40 | 19 | Example |
| 39 | A | 7.0 | 1290 | 852 | Absent | 900 | 400 | 40 | 19 | Example |

**[Table 3]**

| No | Steel kind symbol | Slab length | Heating temperature | Finishing temperature | Flange outer surface water cooling after rolling | Height | Flange width | Flange thickness | Web thickness | Classification |
|---|---|---|---|---|---|---|---|---|---|---|
| | | [m] | [°C] | [°C] | | [mm] | [mm] | [mm] | [mm] | |
| 40 | BB | 6.0 | 1290 | 882 | Absent | 900 | 400 | 40 | 19 | Comparative Example |
| 41 | CC | 6.0 | 1280 | 880 | Absent | 900 | 400 | 40 | 19 | Comparative Example |
| 42 | DD | 6.0 | 1290 | 882 | Absent | 900 | 400 | 40 | 19 | Comparative Example |
| 43 | EE | 6.0 | 1290 | 882 | Absent | 900 | 400 | 40 | 19 | Comparative Example |
| 44 | FF | 6.0 | 1275 | 881 | Absent | 900 | 400 | 40 | 19 | Comparative Example |
| 45 | GG | 6.0 | 1290 | 882 | Absent | 900 | 400 | 40 | 19 | Comparative Example |
| 46 | HH | 6.0 | 1300 | 882 | Absent | 900 | 400 | 40 | 19 | Comparative Example |
| 47 | II | 6.0 | 1300 | 850 | Absent | 900 | 400 | 40 | 19 | Comparative Example |
| 48 | JJ | 6.0 | 1290 | 862 | Absent | 900 | 400 | 40 | 19 | Comparative Example |
| 49 | KK | 6.0 | 1290 | 863 | Absent | 900 | 400 | 40 | 19 | Comparative Example |
| 50 | LL | 6.0 | 1300 | 890 | Absent | 900 | 400 | 40 | 19 | Comparative Example |
| 51 | MM | 6.0 | 1290 | 883 | Absent | 900 | 400 | 40 | 19 | Comparative Example |
| 52 | NN | 6.0 | 1300 | 885 | Absent | 900 | 400 | 40 | 19 | Comparative Example |
| 53 | AE | 6.0 | 1280 | 800 | Present | 700 | 200 | 25 | 16 | Comparative Example |
| 54 | A | 6.0 | 1290 | 889 | Absent | 650 | 400 | 40 | 19 | Comparative Example |
| 55 | A | 6.0 | 1290 | 820 | Absent | 1020 | 400 | 40 | 19 | Comparative Example |
| 56 | A | 6.0 | 1290 | 882 | Absent | 900 | 195 | 40 | 19 | Comparative Example |
| 57 | A | 6.0 | 1290 | 798 | Absent | 900 | 450 | 40 | 19 | Comparative Example |
| 58 | A | 6.0 | 1300 | 882 | Absent | 900 | 400 | 20 | 19 | Comparative Example |
| 59 | A | 6.0 | 1290 | 882 | Absent | 900 | 400 | 45 | 19 | Comparative Example |
| 60 | A | 6.0 | 1290 | 844 | Absent | 900 | 400 | 40 | 14 | Comparative Example |
| 61 | A | 7.2 | 1290 | 823 | Absent | 900 | 400 | 40 | 19 | Comparative Example |
| 62 | A | 6.0 | 1090 | 803 | Absent | 900 | 400 | 40 | 19 | Comparative Example |
| 63 | A | 6.0 | 1290 | 780 | Absent | 900 | 400 | 40 | 19 | Comparative Example |
| 64 | OA | 6.0 | 1280 | 883 | Absent | 900 | 400 | 40 | 19 | Comparative Example |
| 65 | OB | 6.0 | 1290 | 881 | Absent | 900 | 400 | 40 | 19 | Comparative Example |
| 66 | AG | 9.0 | 1290 | 841 | Absent | 900 | 430 | 40 | 19 | Comparative Example |
| 67 | AH | 6.0 | 1290 | 880 | Absent | 900 | 400 | 40 | 19 | Comparative Example |
| 68 | AE | 6.0 | 1280 | 854 | Present | 700 | 200 | 25 | 16 | Comparative Example |
| 69 | A | 8.0 | 1290 | 791 | Absent | 900 | 400 | 40 | 19 | Comparative Example |
| 70 | AF | 9.0 | 1290 | 851 | Absent | 900 | 430 | 40 | 19 | Comparative Example |

| | | | | | | | | | | |
|---|---|---|---|---|---|---|---|---|---|---|
| Underlined means outside the range of the present invention. | | | | | | | | | | |

A JIS Z 2241 (2011) No. 4 round bar test piece having, as its length direction, a rolling direction from (1/4)t_{f} from the outer surface in the flange thickness-direction 5a and the (1/6)F position 6 from the outer edge surface in the flange width-direction 5b in a width-direction cross section of the rolled H-shape steel as shown in FIG. 2, was collected, and the mechanical properties (yield strength (YP), tensile strength (TS), yield ratio, and elongation were evaluated, a 2 mm V-notch Charpy impact test piece was further collected from the same position, and the impact value (toughness) of the base metal) were measured. The properties of this point were obtained because in the rolled H-shape steel 5 shown in FIG. 2, the (1/6)F position from the outer edge surface in the flange width-direction 5b was considered to represent the average mechanical properties of the rolled H-shape steel.

The yield strength (YP), tensile strength (TS), and elongation were obtained by conducting a tension test based on JIS Z 2241 (2011).

The impact value (toughness) of the base metal was obtained by conducting a Charpy impact test at 0°C based on JIS Z 2242 (2005). The length direction of the notch (notch) of the Charpy impact test piece was parallel to the flange thickness direction.

For the impact value (toughness) of the weld, a flange of the obtained rolled H-shape steel was cut out, a single-bevel-groove was formed in an end surface, and gas metal arc welding was performed at a weld heat input of 12 kJ/cm. Each test piece was collected so that the bonded portion of the groove on the perpendicular portion side became a Charpy impact test piece notch, and the impact value (toughness) of the weld was evaluated in the same manner as the impact value of the base metal.

The target values of the mechanical properties were a yield strength (YP) of 385 to 505 N/mm², a tensile strength (TS) of 550 to 670 N/mm², a yield ratio of 0.80 or less, an elongation of 16.0% or more, and a V-notch Charpy absorbed energy at 0°C in the base metal and the weld of 70 J or more.

Furthermore, the weldability was evaluated by the method of y-groove weld cracking test based on JIS Z 3158 (2016) (hereinafter, sometimes referred to as y cracking test).

The results of the mechanical properties obtained above are shown in Tables 4 and 5.

Furthermore, at the (1/6)F position from the outer edge surface in the flange width-direction, the microstructure at the depth of 100 µm from the outer surface in the flange thickness-direction and the microstructure at the depth of (1/2)t_{f} from the outer surface in the flange thickness-direction were observed. The observation of the microstructure was performed on a region within a rectangle of 500 µm (rolling direction) × 400 µm (flange thickness direction) using an optical microscope, and the microstructure was identified.

As the microstructure (flange outer surface portion structure) at the depth of 100 µm from the outer surface in the flange thickness-direction, the microstructure at a position of (1/6)F from the outer edge surface in the flange width-direction 5b of the rolled H-shape steel 5 shown in FIG. 2 and at the depth of 100 µm from the outer surface in the flange thickness-direction 5a was observed. In addition, as the microstructure (flange middle portion structure) at the depth of (1/2)t_{f} from the outer surface in the flange thickness-direction 5a, the microstructure at a position of (1/6)F from the outer edge surface in the flange width-direction 5b of the rolled H-shape steel 5 shown in FIG. 2 and at the depth of (1/2)t_{f} from the outer surface in the flange thickness-direction 5a was observed.

In the above visual field, MA was exposed as a white phase at a similar magnification and a visual field by LePera etchant, and the area ratio of MA was measured by image processing. In addition, in a similar observation visual field, from an optical microscopic structure at 200 times exposed by Nital etchant, it was determined whether or not a structure other than MA was any of ferrite, pearlite, bainite, and martensite.

The structure observation results are shown in Tables 4 and 5. Regarding the observation of the microstructure at the observation position, a case where the area ratio of MA was 5% or less and the other structures were ferrite and pearlite was determined to be within the range of the present invention and acceptable, and described as "ferrite + pearlite" in Tables 4 and 5.

Furthermore, based on the Vickers hardness test of JIS Z 2244 (2009), the difference between the Vickers hardness at the depth of 100 µm from the outer surface in the flange thickness-direction and the Vickers hardness at the depth of (1/2)t_{f} from the outer surface in the flange thickness-direction was obtained. As the Vickers hardness at the depth of 100 µm from the outer surface in the flange thickness-direction, the Vickers hardness of the outer surface in the flange thickness-direction at the (1/6)F position from the outer edge surface in the flange width-direction 5b in FIG. 2 was measured at five points, and the average value was obtained. The load was set to 20 kgf.

As the Vickers hardness at the depth of (1/2)t_{f} from the outer surface in the flange thickness-direction, the Vickers hardness at (1/6)F from the outer edge surface in the flange width-direction 5b and at the depth of (1/2)t_{f} in the thickness direction of the flange in FIG. 2 was measured. A case where the difference between the Vickers hardness at the depth of 100 µm from the outer surface in the flange thickness-direction and the Vickers hardness at the depth of (1/2)t_{f} from the outer surface in the flange thickness-direction, which was obtained by the above-described method, was 50 Hv or less was determined to be within the range of the present invention and acceptable.

The results of the Vickers hardness test are shown in Tables 4 and 5.

**[Table 4]**

| No | Steel kind symbol | Yield strength | Tensile strength | Yield ratio | Elongation | Macrostructure: (1/6)F | | Difference in Vickers hardness between depth of 100 µm and depth of (1/2)t_{f} from outer surface in flange thickness-direction | Charpy absorbed energy at 0°C | | y cracking test | Classification |
|---|---|---|---|---|---|---|---|---|---|---|---|---|
| | | | | | | Depth of 100 µm from outer surface in flange thickness-direction | Depth of (1/2)t_{f} from outer surface in flange thickness-direction | | Base metal | Weld | | |
| | | [MPa] | [MPa] | - | [%] | | | [Hv] | [J/cm²] | [J/cm²] | | |
| 1 | A | 431 | 567 | 0.76 | 30.0 | Ferrite-pearlite | Ferrite-pearlite | 25 | 144 | 102 | No cracking | Example |
| 2 | B | 386 | 552 | 0.70 | 35.0 | Ferrite-pearlite | Ferrite-pearlite | 24 | 159 | 115 | No cracking | Example |
| 3 | C | 504 | 663 | 0.76 | 25.7 | Ferrite-pearlite | Ferrite-pearlite | 26 | 122 | 90 | No cracking | Example |
| 4 | D | 503 | 660 | 0.76 | 25.8 | Ferrite-pearlite | Ferrite-pearlite | 25 | 124 | 92 | No cracking | Example |
| 5 | E | 386 | 552 | 0.70 | 36.4 | Ferrite-pearlite | Ferrite-pearlite | 36 | 175 | 116 | No cracking | Example |
| 6 | F | 386 | 553 | 0.70 | 36.6 | Ferrite-pearlite | Ferrite-pearlite | 30 | 171 | 114 | No cracking | Example |
| 7 | G | 482 | 616 | 0.78 | 27.6 | Ferrite-pearlite | Ferrite-pearlite | 35 | 133 | 100 | No cracking | Example |
| 8 | H | 450 | 575 | 0.78 | 29.6 | Ferrite-pearlite | Ferrite-pearlite | 25 | 140 | 101 | No cracking | Example |
| 9 | I | 465 | 594 | 0.78 | 28.6 | Ferrite-pearlite | Ferrite-pearlite | 42 | 137 | 101 | No cracking | Example |
| 10 | J | 460 | 587 | 0.78 | 29.0 | Ferrite-pearlite | Ferrite-pearlite | 25 | 139 | 105 | No cracking | Example |
| 11 | K | 387 | 551 | 0.70 | 35.1 | Ferrite-pearlite | Ferrite-pearlite | 25 | 169 | 113 | No cracking | Example |
| 12 | L | 386 | 552 | 0.70 | 34.5 | Ferrite-pearlite | Ferrite-pearlite | 48 | 166 | 121 | No cracking | Example |
| 13 | M | 385 | 551 | 0.70 | 34.8 | Ferrite-pearlite | Ferrite-pearlite | 25 | 167 | 107 | No cracking | Example |
| 14 | N | 386 | 551 | 0.70 | 40.8 | Ferrite-pearlite | Ferrite-pearlite | 41 | 181 | 121 | No cracking | Example |
| 15 | O | 504 | 669 | 0.75 | 25.2 | Ferrite-pearlite | Ferrite-pearlite | 47 | 121 | 99 | No cracking | Example |
| 16 | P | 442 | 565 | 0.78 | 30.1 | Ferrite-pearlite | Ferrite-pearlite | 26 | 145 | 98 | No cracking | Example |
| 17 | Q | 407 | 551 | 0.74 | 32.7 | Ferrite-pearlite | Ferrite-pearlite | 40 | 112 | 96 | No cracking | Example |
| 18 | R | 430 | 564 | 0.76 | 18.0 | Ferrite-pearlite | Ferrite-pearlite | 26 | 102 | 81 | No cracking | Example |
| 19 | S | 441 | 569 | 0.78 | 18.0 | Ferrite-pearlite | Ferrite-pearlite | 27 | 149 | 80 | No cracking | Example |
| 20 | T | 440 | 568 | 0.77 | 17.9 | Ferrite-pearlite | Ferrite-pearlite | 27 | 121 | 80 | No cracking | Example |
| 21 | U | 442 | 569 | 0.78 | 19.0 | Ferrite-pearlite | Ferrite-pearlite | 26 | 149 | 105 | No cracking | Example |
| 22 | V | 441 | 570 | 0.77 | 18.0 | Ferrite-pearlite | Ferrite-pearlite | 27 | 140 | 80 | No cracking | Example |
| 23 | W | 441 | 567 | 0.78 | 18.1 | Ferrite-pearlite | Ferrite-pearlite | 28 | 143 | 91 | No cracking | Example |
| 24 | X | 430 | 568 | 0.76 | 18.1 | Ferrite-pearlite | Ferrite-pearlite | 25 | 145 | 104 | No cracking | Example |
| 25 | Y | 452 | 573 | 0.79 | 17.1 | Ferrite-pearlite | Ferrite-pearlite | 28 | 83 | 74 | No cracking | Example |
| 26 | Z | 463 | 599 | 0.77 | 18.4 | Ferrite-pearlite | Ferrite-pearlite | 27 | 142 | 104 | No cracking | Example |
| 27 | AA | 484 | 609 | 0.79 | 17.4 | Ferrite-pearlite | Ferrite-pearlite | 28 | 131 | 75 | No cracking | Example |
| 28 | AB | 453 | 579 | 0.78 | 17.9 | Ferrite-pearlite | Ferrite-pearlite | 29 | 130 | 79 | No cracking | Example |
| 29 | AC | 439 | 572 | 0.77 | 17.5 | Ferrite-pearlite | Ferrite-pearlite | 26 | 129 | 84 | No cracking | Example |
| 30 | AD | 409 | 552 | 0.74 | 30.1 | Ferrite-pearlite | Ferrite-pearlite | 41 | 102 | 90 | No cracking | Example |
| 31 | A | 441 | 561 | 0.79 | 30.5 | Ferrite-pearlite | Ferrite-pearlite | 23 | 145 | 103 | No cracking | Example |
| 32 | A | 445 | 568 | 0.78 | 29.4 | Ferrite-pearlite | Ferrite-pearlite | 25 | 131 | 100 | No cracking | Example |
| 33 | A | 440 | 562 | 0.78 | 30.5 | Ferrite-pearlite | Ferrite-pearlite | 21 | 146 | 106 | No cracking | Example |
| 34 | A | 466 | 590 | 0.79 | 30.0 | Ferrite-pearlite | Ferrite-pearlite | 24 | 144 | 98 | No cracking | Example |
| 35 | A | 435 | 568 | 0.76 | 29.1 | Ferrite-pearlite | Ferrite-pearlite | 25 | 143 | 101 | No cracking | Example |
| 36 | AI | 432 | 568 | 0.76 | 30.0 | Ferrite-pearlite | Ferrite-pearlite | 25 | 148 | 103 | No cracking | Example |
| 37 | A | 432 | 567 | 0.76 | 29.1 | Ferrite-pearlite | Ferrite-pearlite | 25 | 140 | 101 | No cracking | Example |
| 38 | A | 439 | 571 | 0.77 | 29.0 | Ferrite-pearlite | Ferrite-pearlite | 25 | 139 | 103 | No cracking | Example |
| 39 | A | 460 | 580 | 0.79 | 28.5 | Ferrite-pearlite | Ferrite-pearlite | 25 | 128 | 99 | No cracking | Example |

**[Table 5]**

| No | Steel kind symbol | Yield strength | Tensile strength | Yield ratio | Elongation | Microstructure: (1/6)F | | Difference in Vickers hardness between depth of 100 µm and depth of (1/2)t_{f} from outer surface in flange tliickness-direction | Charpy absorbed energy at 0°C | | y cracking test | Classification |
|---|---|---|---|---|---|---|---|---|---|---|---|---|
| | | | | | | Depth of 100 µm from outer surface in flange thickness-direction | Depth of (1/2)t_{f} from outer surface in flange thickness-direction | | Base metal | Weld | | |
| | | [MPa] | [MPa] | - | [%] | | | [Hv] | [J/cm²] | [J/cm²] | | |
| 40 | BB | 375 | 434 | 0.86 | 39.2 | Ferrite-pearlite | Ferrite-pearlite | 24 | 188 | 126 | No cracking | Comparative Example |
| 41 | CC | 546 | 697 | 0.78 | 24.4 | Ferrite-pearlite | Ferrite-pearlite | 26 | 61 | 51 | Cracked | Comparative Example |
| 42 | DD | 384 | 546 | 0.70 | 31.2 | Ferrite-pearlite | Ferrite-pearlite | 25 | 150 | 102 | No cracking | Comparative Example |
| 43 | EE | 456 | 582 | 0.78 | 29.2 | Ferrite-pearlite | Ferrite-pearlite | 35 | 64 | 42 | No cracking | Comparative Example |
| 44 | FF | 319 | 407 | 0.78 | 41.7 | Ferrite-pearlite | Ferrite-pearlite | 30 | 200 | 125 | No cracking | Comparative Example |
| 45 | GG | 551 | 703 | 0.78 | 24.2 | Ferrite-pearlite | Ferrite-pearlite | 35 | 52 | 41 | No cracking | Comparative Example |
| 46 | HH | 419 | 535 | 0.78 | 31.8 | Ferrite-pearlite | Ferrite-pearlite | 25 | 153 | 104 | No cracking | Comparative Example |
| 47 | II | 489 | 648 | 0.75 | 29.0 | Ferrite-pearlite | Ferrite-pearlite | 42 | 57 | 50 | No cracking | Comparative Example |
| 48 | JJ | 449 | 553 | 0.81 | 30.8 | Ferrite-pearlite | Ferrite-pearlite | 30 | 68 | 58 | No cracking | Comparative Example |
| 49 | KK | 460 | 588 | 0.78 | 15.0 | Ferrite-pearlite | Ferrite-pearlite | 35 | 55 | 41 | No cracking | Comparative Example |
| 50 | LL | 446 | 569 | 0.78 | 15.4 | Ferrite-pearlite | Ferrite-pearlite | 25 | 56 | 40 | No cracking | Comparative Example |
| 51 | MM | 405 | 517 | 0.78 | 15.3 | Ferrite-pearlite | Ferrite-pearlite | 42 | 41 | 38 | No cracking | Comparative Example |
| 52 | NN | 386 | 551 | 0.70 | 15.1 | Ferrite-pearlite | Ferrite-pearlite | 25 | 42 | 45 | No cracking | Comparative Example |
| 53 | AE | 463 | 580 | 0.80 | 17.0 | Martensite | Bainite | 62 | 130 | 102 | No cracldne | Comparative Example |
| 54 | A | 384 | 545 | 0.70 | 30.4 | Ferrite-pearlite | Ferrite-pearlite | 24 | 145 | 105 | No cracking | Comparative Example |
| 55 | A | 458 | 566 | 0.81 | 30.0 | Ferrite-pearlite | Ferrite-pearlite | 25 | 143 | 101 | No cracking | Comparative Example |
| 56 | A | 430 | 541 | 0.79 | 31.1 | Ferrite-pearlite | Ferrite-pearlite | 26 | 147 | 108 | No cracking | Comparative Example |
| 57 | A | 461 | 567 | 0.81 | 29.0 | Ferrite-pearlite | Ferrite-pearlite | 24 | 144 | 103 | No cracking | Comparative Example |
| 58 | A | 462 | 567 | 0.81 | 30.0 | Ferrite-pearlite | Ferrite-pearlite | 25 | 144 | 89 | No cracking | Comparative Example |
| 59 | A | 431 | 545 | 0.79 | 31.2 | Ferrite-pearlite | Ferrite-pearlite | 31 | 146 | 103 | No cracking | Comparative Example |
| 60 | A | 466 | 567 | 0.82 | 28.0 | Ferrite-pearlite | Ferrite-pearlite | 25 | 144 | 98 | No cracking | Comparative Example |
| 61 | A | 458 | 566 | 0.81 | 27.5 | Ferrite-pearlite | Ferrite-pearlite | 26 | 147 | 104 | No cracking | Comparative Example |
| 62 | A | 458 | 567 | 0.81 | 27.2 | Ferrite-pearlite | Ferrite-pearlite | 26 | 144 | 104 | No cracking | Comparative Example |
| 63 | A | 466 | 567 | 0.82 | 29.0 | Ferrite-pearlite | Ferrite-pearlite | 25 | 147 | 105 | No cracking | Comparative Example |
| 64 | OA | 431 | 565 | 0.76 | 15.0 | Ferrite-pearlite | Ferrite-pearlite | 25 | 64 | 24 | No cracking | Comparative Example |
| 65 | OB | 430 | 567 | 0.76 | 14.9 | Ferrite-pearlite | Ferrite-pearlile | 25 | 66 | 35 | No cracking | Comparative Example |
| 66 | AG | 464 | 567 | 0.82 | 26.0 | Ferrite-pearlite | Ferrite-pearlite | 26 | 139 | 101 | No cracking | Comparative Example |
| 67 | AH | 466 | 568 | 0.82 | 26.2 | Ferrite-pearlite | Ferrite-pearlite | 26 | 101 | 82 | No cracking | Comparative Example |
| 68 | AE | 461 | 580 | 0.80 | 17.0 | Martensite | Bainite | 62 | 89 | 98 | No cracking | Comparative Example |
| 69 | A | 459 | 567 | 0.81 | 26.2 | Ferrite-pearlite | Ferrite-pearlite | 26 | 145 | 103 | No cracking | Comparative Example |
| 70 | AF | 412 | 620 | 0.66 | 14.6 | Ferrite-pearlite | Ferrite-pearlite | 24 | 138 | 99 | No cracking | Example |

| | | | | | | | | | | | | |
|---|---|---|---|---|---|---|---|---|---|---|---|---|
| Underlined means outside the range of the present invention. | | | | | | | | | | | | |

As shown in Table 4, in Nos. 1 to 39 as examples of the present invention, the yield strength and tensile strength at room temperature (20°C) were high, the yield ratio was 0.80 or less, the elongation was 16.0% or more, the microstructure contained 95% or more of ferrite and pearlite by area ratio, no cracking had occurred in the y cracking test, and the V-notch Charpy absorbed energy at 0°C in both the base metal and weld sufficiently satisfied the target.

The residual structure in Nos. 1 to 39 as the examples of the present invention was a mixture of martensite and austenite (MA) in a proportion of 5% or less.

On the other hand, Nos. 40 to 70 shown in Table 5 are comparative examples. While air cooling was performed as the cooling after rolling in all of the examples, flange outer surface water cooling was applied in Comparative Examples Nos. 53 and 68.

In No. 40, since the C content was insufficient, the yield strength and tensile strength were insufficient. In addition, the yield ratio was too high. In No. 41, since the C content was excessive, the yield strength and tensile strength became excessive, the toughness of the base metal and heat-affected zone was insufficient, and cracking had also occurred in the y cracking test.

In No. 42, since the Si content was insufficient, the yield strength and the tensile strength were insufficient. In No. 43, the Si content was excessive, and the toughness of the base metal and the weld was insufficient.

In No. 44, since the Mn content was insufficient, the yield strength and the tensile strength were insufficient. In No. 45, the Mn content was excessive, the yield strength and the tensile strength were excessive, and the toughness of the base metal and the weld was insufficient.

In No. 46, since the V content was insufficient, the tensile strength was insufficient. In No. 47, since the V content was excessive, the toughness of the base metal and the weld was insufficient.

In No. 48, since the Nb content was excessive, the yield ratio was excessive, and the toughness of the base metal and the weld was insufficient.

In No. 49, since the Al content was excessive, the elongation was insufficient, and the toughness of the base metal and the weld was insufficient.

In No. 50, since the Ti content was excessive, the elongation was insufficient, and the toughness of the base metal and the weld was insufficient.

In No. 51, the O content was excessive, the tensile strength and the elongation were insufficient, and the toughness of the base metal and the weld was insufficient.

In No. 52, the N and Ca contents were excessive, the elongation were insufficient, and the toughness of the base metal and the weld was insufficient.

In No. 53, since the flange outer surface water cooling was applied after rolling, the microstructure at the depth of 100 µm from the outer surface in the flange thickness-direction was martensite, and the microstructure at the depth of (1/2)t_{f} from the outer surface in the flange thickness-direction was bainite. In addition, the difference between the Vickers hardness at the depth of 100 µm from the outer surface in the flange thickness-direction and the Vickers hardness at the depth of (1/2)t_{f} from the outer surface in the flange thickness-direction was excessive.

In No. 54, the height was too small and was not suitable for an H-shape steel applied to a large span structure, and due to the influence of radiant heat from faced flange, cooling after rolling became slow, so that the yield strength and tensile strength were insufficient.

In No. 55, the height was too large, and the finishing temperature was too low. In addition, the effect of slow cooling due to radiant heat of the flange was not obtained, and the yield ratio was excessive.

In No. 56, the flange width was too small and was not suitable for an H-shape steel applied to a large span structure, and the effect of rolling could not be sufficiently utilized, so that the tensile strength was insufficient.

In No. 57, the flange width was excessive and the finishing temperature was low, so that the yield ratio was excessive.

In No. 58, the flange thickness was too small and the yield ratio was excessive. In No. 59, the flange thickness was excessive and the tensile strength was insufficient.

In No. 60, the number of rolling passes increased in order to reduce the web thickness, the finishing temperature decreased, and the yield ratio became excessive.

In Nos. 61, 66, and 69, the length of the slab was excessive and the rolling time increased. Therefore, the finishing temperature decreased, and the yield ratio became excessive.

In No. 62, the heating temperature was too low. As a result, the finish temperature was also low, and the yield ratio became excessive.

In No. 63, the finishing temperature was too low and the yield ratio became excessive.

In No. 64, the Ca content was insufficient, the elongation was insufficient, and the toughness of the base metal and the weld was insufficient.

In No. 65, the Ca content was excessive, the elongation was insufficient, and the toughness of the base metal and the weld was insufficient.

In No. 67, the N content was excessive, and the yield ratio became excessive.

In No. 68, since the flange outer surface water cooling was applied after rolling, the microstructure at the depth of 100 µm from the outer surface in the flange thickness-direction was martensite, and the microstructure at the depth of (1/2)t_{f} from the outer surface in the flange thickness-direction was bainite. In addition, the difference between the Vickers hardness at the depth of 100 µm from the outer surface in the flange thickness-direction and the Vickers hardness at the depth of (1/2)t_{f} from the outer surface in the flange thickness-direction was excessive.

In No. 70, the length of the slab was excessive, the finishing rolling temperature was low, and the flange width was particularly excessive here. Therefore, the cooling rate after rolling was high, the strength increased, the ductility decreased, and the elongation was lower than the target.

### [Industrial Applicability]

According to the present invention, a rolled H-shape steel which is an H-shape steel manufactured without using an accelerating cooling apparatus, which requires investment of large-scale facilities, has a strength as high as TS ≥ 550 N/mm², a yield ratio as low as YR ≤ 0.80, excellent elongation, and excellent weldability can be obtained. When such a rolled H-shape steel is used, for example, in a case where the rolled H-shape steel is used for buildings, a reduction in the amount of steel used, a reduction in construction costs for welding, inspection, and the like, and a significant reduction in costs due to a reduction in the construction period can be achieved. In addition, according to the rolled H-shape steel, the difference in hardness between the outer surface of the flange and the thickness middle of the flange is small, so that brittle fracture during an earthquake due to stress concentration and a difficulty in bolt hole piercing due to excessive outer surface hardness can be avoided.

### [Brief Description of the Reference Symbols]

- 1:: heating furnace
- 2:: rough rolling mill
- 3:: intermediate rolling mill
- 4:: finish rolling mill
- 5:: rolled H-shape steel
- 5a:: outer surface in flange thickness-direction
- 5b:: outer edge surface in flange width-direction
- 6:: measurement position of mechanical properties
- F:: width of flange
- t_{f}:: thickness of flange
- H:: height
- t_{w}:: thickness of web

## Claims

1. A rolled H-shape steel comprising, as a steel composition, by mass%:
C: 0.10% to 0.25%;
Si: 0.05% to 0.50%;
Mn: 0.70% to 1.80%;
V: 0.06% to 0.20%;
N: 0.0010% to 0.0040%;
Ti: 0.003% to 0.015%;
Ca: 0.0003% to less than 0.0020%;
Cu: 0% to 0.30%;
Ni: 0% to 0.20%;
Mo: 0% to 0.30%;
Cr: 0% to 0.05%;
Mg: 0% to less than 0.0030%;
REM: 0% to 0.010%;
Nb: limited to 0.010% or less;
Al: limited to 0.06% or less;
O: limited to 0.0035% or less; and
a remainder including of Fe and impurities,
wherein, when a width of a flange is referred to as F and a thickness of the flange is referred to as t_{f},
at a (1/6)F position from an outer edge surface in a flange width-direction,
a microstructure at a depth of 100 µm from an outer surface in a flange thickness-direction and a microstructure at a depth of (1/2)t_{f} from the outer surface in the flange thickness-direction contain 95% or more of a ferrite and a pearlite and 5% or less of a residual structure by area ratio,
a difference between a Vickers hardness at the depth of 100 µm from the outer surface in the flange thickness-direction and a Vickers hardness at the depth of (1/2)t_{f} from the outer surface in the flange thickness-direction is 50 Hv or less,
at (1/4)t_{f} from the outer surface in the flange thickness-direction and at the (1/6)F position from the outer edge surface in the flange width-direction,
a yield strength is 385 to 505 N/mm²,
a tensile strength is 550 to 670 N/mm²,
a yield ratio is 0.80 or less,
an elongation is 16.0% or more, and
a V-notch Charpy absorbed energy at 0°C is 70 J or more, and
as dimensions,
a height is 700 to 1000 mm,
a flange width is 200 to 400 mm,
a flange thickness is 22 to 40 mm, and
a web thickness is 16 mm or more.

2. The rolled H-shape steel according to claim 1,
wherein the rolled H-shape steel contains one or two or more of, by mass%, Cu: 0.01% to 0.30%,
Ni: 0.01% to 0.20%,
Mo: 0.01% to 0.30%, and
Cr: 0.01% to 0.05%.

3. The rolled H-shape steel according to claim 1 or 2,
wherein the rolled H-shape steel contains, by mass%,
REM: 0.0005% to 0.010%.

4. The rolled H-shape steel according to any one of claims 1 to 3,
wherein the rolled H-shape steel contains, by mass%,
Mg: 0.0003% to less than 0.0030%.

5. A manufacturing method of the rolled H-shape steel according to any one of claims 1 to 4, the method comprising:
casting a molten steel having the steel composition according to any one of claims 1 to 4, into a slab having a slab length of 7.0 m or less;
heating the slab to 1200°C to 1350°C, and performing hot rolling on the slab at a finishing temperature of 850°C or higher to obtain an H-shape steel; and
performing an air cooling on the H-shape steel.
